# FASCICULE DE BREVET EUROPEEN

(11) **EP 0 786 223 B1**
(45) Date de publication et mention de la délivrance du brevet: **17.05.2000**
(21) Numéro de dépôt: 97400111.7
(22) Date de dépôt: 20.01.1997
(51) Int. Cl.: A47J 37/08

(54) **Procédé de traitement d'un aliment placé dans un grille-pain électrique**
Behandlungsverfahren eines Nahrungsmittels in einem Brotröster
Method for treating a food product in a toaster

(30) Priorité: 29.01.1996 FR 9601000
(43) Date de publication de la demande: 30.07.1997
(73) Titulaire: MOULINEX ESPANA S.A., 08021 Barcelone (ES)
(72) Inventeur: Arnedo, Julian, 08031 Barcelone (ES); Basora Sanjuan, Antonio, 08028 Barcelone (ES)
(74) Mandataire: Busquets, Jean-Pierre

(56) Documents cités:
- WO-A-94/03094
- FR-A- 2 483 725
- PATENT ABSTRACTS OF JAPAN vol. 016, no. 261 (C-0950), 12 Juin 1992 & JP 04 061834 A (MITSUBISHI ELECTRIC HOME APPLIANCE CO LTD;OTHERS: 01), 27 Février 1992,

## Description

L'invention concerne un procédé de traitement d'un aliment placé dans un grille-pain électrique comportant un boîtier comprenant au moins une enceinte de grillage avec des moyens de chauffage, un circuit d'alimentation desdits moyens de chauffage piloté par un interrupteur électronique, dont la mise sous tension est commandée par un bouton de commande, et qui comprend des premiers moyens de sélection d'au moins un niveau de grillage de l'aliment, des seconds moyens de sélection d'au moins un niveau de consistance de l'aliment et des moyens de commande qui appliquent, en fonction des informations reçues des premiers et seconds moyens de sélection, un signal de commande à l'interrupteur du circuit d'alimentation pendant une durée de fonctionnement T.

Dans les grille-pain connus de ce genre équipés de premiers moyens de sélection d'au moins un niveau de grillage de l'aliment, ainsi que de seconds moyens de sélection d'au moins un niveau de consistance de l'aliment, il s'avère que les procédés de traitement des aliments par l'alimentation des moyens de chauffage selon un cycle marche-arrêt prédéterminé, ne permettent pas d'obtenir un résultat entièrement satisfaisant. En effet, la plupart du temps, l'utilisateur ayant sélectionné un certain niveau de grillage correspondant au brunissage de l'aliment et un certain niveau de consistance correspondant au croustillant de l'aliment, le procédé de traitement de l'aliment contrôle de manière combinée le brunissage et le croustillant de l'aliment et, de ce fait, l'aliment est soit bien grillé mais pas assez croustillant, soit bien grillé mais trop croustillant, soit mal grillé et peu croustillant, soit mal grillé et trop croustillant.

D'autre part, lors de la mise en oeuvre des procédés de traitement des aliments, les cycles marche-arrêt appliqués aux moyens de chauffage présentent des fréquences qui induisent des harmoniques de courant trop élevés et déclenchent des perturbations sur le réseau électrique, constituant ainsi des gênes pour les utilisateurs branchés sur ledit réseau.

Le but de l'invention est de remédier aux inconvénients précités notamment en limitant les perturbations apportées au réseau électrique et en permettant de contrôler indépendamment le brunissage et le croustillant de l'aliment.

Selon l'invention, pendant la durée de fonctionnement T, les moyens de commande déclenchent successivement une première opération au cours de laquelle lesdits moyens de commande alimentent les moyens de chauffage en continu à une puissance maximale pendant une durée Tv liée aux premiers moyens de sélection, une deuxième opération au cours de laquelle les moyens de commande coupent l'alimentation des moyens de chauffage pendant une durée d'interruption Ti et une troisième opération au cours de laquelle, compte tenu de la sélection du niveau de consistance de l'aliment, les moyens de commande alimentent cycliquement les moyens de chauffage selon un cycle marche-arrêt d'une durée Tc et dont la période Tf est constante.

Grâce au procédé de traitement de l'aliment selon l'invention, le niveau de grillage et le niveau de consistance de l'aliment sont contrôlés avec une précision remarquable du fait d'une gestion indépendante des deux opérations réalisant le niveau de grillage et le niveau de consistance de l'aliment. Ainsi, les aliments traités dans le grille-pain sont grillés et croustillants selon les goûts de l'utilisateur en assurant une cohérence maximale entre les niveaux de grillage et de consistance sélectionnés par l'utilisateur et les niveaux de grillage et de consistance réellement obtenus. De plus, grâce à l'alimentation des moyens de chauffage en continu à une puissance maximale, le niveau de grillage de l'aliment sélectionné par l'utilisateur est obtenu plus rapidement et ce, quel que soit le niveau de consistance de l'aliment sélectionné.

D'autre part, grâce à ce nouveau procédé, on satisfait aux normes concernant la limitation des perturbations apportées aux réseaux par les appareils électriques notamment les normes EN60555-3, CEI555-3 ainsi que leurs évolutions à venir EN61000-3-3 et CEI-3-3, limitant les variations relatives de tension en fonction du nombre de ces variations par unité de temps sur une source d'indépendance définie par la norme et qui sont la cause des perturbations connues sous le nom de "FLICKER".

Le document Patent Abstracts of Japan vol. 016, No 261 divulge un procédé de traitement avec des opérations programmées différentes et sélectionnées par moyens de sélection.

Les caractéristiques et avantages de l'invention ressortiront de la description qui va suivre, prise à titre d'exemple non limitatif, en référence aux dessins annexés dans lesquels :
- la figure 1 est une vue schématique en perspective d'un grille-pain auquel est appliquée l'invention ;
- la figure 2 est une représentation graphique illustrant une séquence d'application d'un signal de commande de l'interrupteur électronique du circuit d'alimentation des moyens de chauffage pendant une durée de fonctionnement T ;
- la figure 3 est une représentation schématique illustrant des moyens de commande fonctionnant selon l'invention et destinés à équiper un grille-pain tel que représenté à la figure 1.

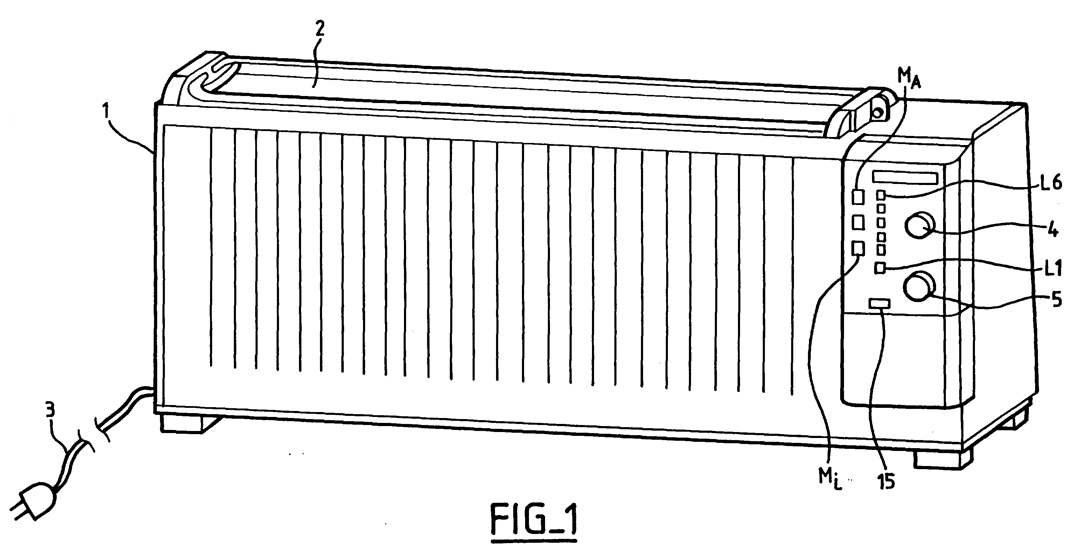

Selon la figure 1, le grille-pain électrique comprend un boîtier 1 comportant au moins une enceinte de grillage 2 avec des moyens de chauffage non représentés, un circuit d'alimentation, non représenté, relié au secteur par une prise 3, et destiné à alimenter les moyens de chauffage ; ledit circuit étant piloté par un interrupteur électronique 16 dont la mise sous tension est commandée par un bouton de commande 15 et qui comprend des premiers moyens de sélection 4 déterminant systématiquement au moins un niveau de grillage d'un aliment tel que des tranches de pain placées à l'intérieur de l'enceinte de grillage 2, des seconds moyens de sélection 5 déterminant un niveau de consistance dudit aliment et des moyens de commande 6 non représentés qui appliquent, en fonction des informations reçues des premiers et seconds moyens de sélection 4 et 5, un signal de commande du circuit d'alimentation pendant une durée de fonctionnement T.

Comme on le voit sur la figure 1, les niveaux de grillage d'un aliment sont définis entre un niveau minimum L1 pour lequel l'aliment est simplement réchauffé avec sensiblement une modification de coloration et un niveau maximum L6 pour lequel l'aliment est très grillé avec une coloration très brunâtre. Les niveaux intermédiaires de grillage sont par exemple des niveaux pour lesquels on a soit une coloration dorée, soit une coloration légèrement brunâtre.

Les niveaux de consistance d'un aliment sont définis entre un niveau minimum Mi pour lequel l'aliment n'est pratiquement pas déshydraté par rapport à son état initial avant traitement et un niveau maximum Ma pour lequel l'aliment est desséché avec un état solide. Un niveau intermédiaire de consistance de l'aliment est par exemple un niveau pour lequel l'aliment est légèrement déshydraté avec un état moelleux.

L'aliment placé à l'intérieur de l'enceinte de grillage du grille-pain est destiné à être traité par mise en oeuvre du procédé de traitement conforme à l'invention.

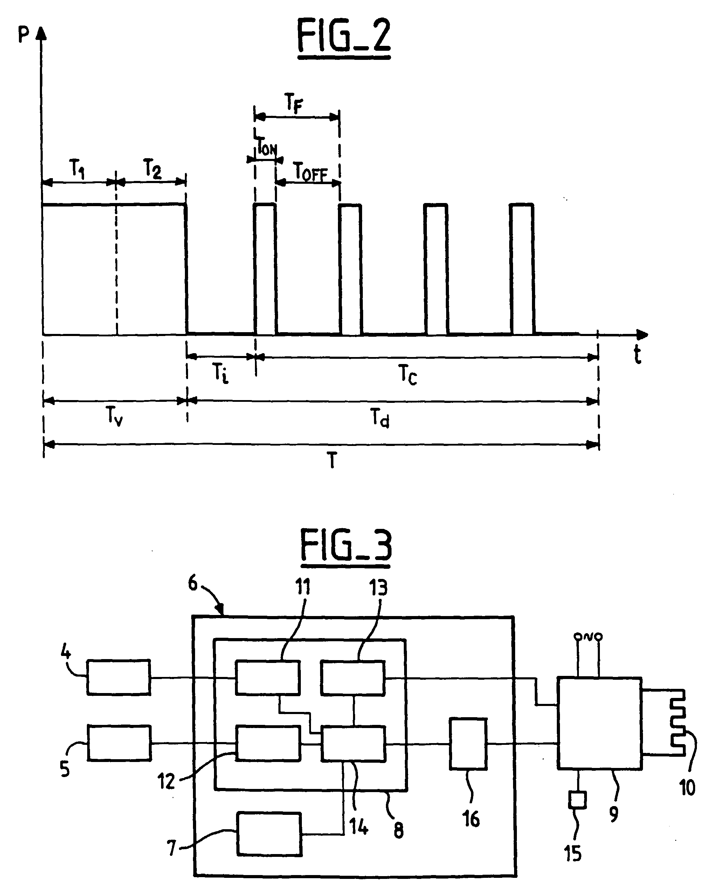

On se réfère maintenant à la figure 2 qui représente une séquence d'application d'un signal de commande à l'interrupteur électronique du circuit d'alimentation des moyens de chauffage pendant la durée de fonctionnement T.

Selon l'invention, le procédé de traitement est caractérisé en ce que, pendant la durée de fonctionnement T, les moyens de commande déclenchent successivement une première opération au cours de laquelle lesdits moyens de commande alimentent les moyens de chauffage en continu à une puissance maximale pendant une durée Tv liée aux premiers moyens de sélection, une deuxième opération au cours de laquelle les moyens de commande coupent l'alimentation des moyens de chauffage pendant une durée d'interruption Ti et une troisième opération au cours de laquelle, compte tenu de la sélection du niveau de consistance de l'aliment, les moyens de commande alimentent cycliquement les moyens de chauffage selon un cycle marche-arrêt d'une durée Tc et dont la période Tf est constante.

Dans l'exemple de réalisation préférentiel représenté à la figure 2, pendant la durée Tv, les moyens de chauffage sont alimentés avec une puissance absorbée maximale de 1200 W de manière à augmenter la rapidité de l'obtention du niveau de grillage désiré.

La durée Tv d'alimentation des moyens de chauffage par les moyens de commande comprend une durée fixe T1 et une durée variable T2. Ladite durée fixe T1 présente une valeur choisie aux environs de 30s et la durée variable T2 présente une valeur comprise dans une plage entre 0 et 90s. Une durée Tv sensiblement équivalente à 30s correspond au niveau minimum 1 de grillage tandis qu'une durée Tv sensiblement équivalente à 120s correspond au niveau maximum 6 de grillage.

La durée Tv de la première opération étant écoulée, les moyens de commande déclenchent la deuxième et la troisième opération dont la durée totale Td présente une valeur comprise dans une plage entre 0 et 5 mm. Une durée Td sensiblement équivalente à 15s correspondant au niveau minimum Mi de consistance et au non déclenchement de la troisième opération tandis qu'une durée Td sensiblement équivalente à 5 mm correspond au niveau maximum Ma de consistance. Un niveau intermédiaire de consistance pour lequel l'aliment a un état moelleux est obtenu avec une durée Td sensiblement équivalente à 2 mm.

Ainsi, grâce à la plage citée ci-dessus, la température à l'intérieur de l'enceinte de grillage est toujours inférieure à 100°C. De cette manière, l'aliment placé dans l'enceinte de grillage ne subit plus un grillage supplémentaire par rapport à celui obtenu lors du déroulement de la première opération.

Lorsque l'utilisateur a choisi un autre niveau de consistance que le niveau minimum, les moyens de commande déclenchent la troisième opération au cours de laquelle le cycle marche-arrêt des moyens de chauffage présente, sur la période Tf, un temps de marche T_{ON} et un temps d'arrêt T_{OFF} qui est sensiblement trois fois supérieur au temps de marche T_{ON}.

Dans l'exemple de réalisation préférentiel, le temps de marche T_{ON} et le temps d'arrêt T_{OFF} sont choisis respectivement de l'ordre de 5 s et de l'ordre de 15 s.

Comme on le voit sur la figure 3, les moyens de commande 6 comprennent, entre autres, des moyens de mémorisation 7 d'une pluralité de durées Tv et Td, un circuit de commande 8 de durée de fonctionnement du circuit d'alimentation 9 des moyens de chauffage 10 comportant un premier compteur 11 déterminant une durée Tv en fonction des premiers moyens de sélection 4, un deuxième compteur 12 déterminant une durée Td en fonction des seconds moyens de sélection 5, un troisième compteur 13 d'une durée d'arrêt Ta du circuit d'alimentation 9 des moyens de chauffage 10 entre deux périodes successives d'utilisation ainsi que des moyens de calcul 14 entre les durées Tv, Td et Ta et la pluralité des durées Tv et Td des moyens de mémorisation 7 pour définir le signal de commande à appliquer à l'interrupteur électronique 16 du circuit d'alimentation 9 des moyens de chauffage 10. Ladite durée Ta mesurée entre deux périodes successives d'utilisation est stockée dans les moyens de mémorisation 7 et les moyens de calcul 14 comparent ladite durée Ta avec des plages de temps préalablement définies, stockées dans lesdits moyens de mémorisation 7 et correspondant chacune à un temps de correction de fonctionnement à appliquer au circuit d'alimentation des moyens de chauffage.

Les moyens de calcul 14 sont constitués, par exemple, par un micro-contrôleur 12MC68HCP7 de chez MOTOROLA. Les premiers et seconds moyens de sélection 4 et 5 comportent, entre autres, des potentiomètres reliés par exemple à des boutons rotatifs. Lesdits potentiomètres reliés aux boutons rotatifs transmettent les informations électriques respectivement aux premier et deuxième compteurs 11 et 12 qui sont, eux-mêmes, reliés aux moyens de calcul 14. La rotation des boutons rotatifs par l'utilisateur détermine un niveau de grillage et un niveau de consistance de l'aliment à traiter et constitue ainsi les informations transmises aux moyens de commande à appliquer à l'interrupteur 16.

Le fonctionnement du procédé de traitement de l'aliment est donc simple et efficace.

L'utilisateur, après avoir placé un aliment par exemple une tranche de pain dans l'enceinte de grillage 2 règle le niveau de grillage par l'intermédiaire des premiers moyens de sélection 4 puis règle le niveau de consistance de l'aliment par l'intermédiaire des seconds moyens de sélection 5. Ensuite l'utilisateur appuie sur le bouton de commande 15 pour déclencher, d'une part, la mise sous tension du circuit d'alimentation 9 des moyens de chauffage 10 et, d'autre part, les moyens de commande 6. Compte tenu des informations sélectionnées sur les premiers et seconds moyens de sélection 4 et 5, les moyens de commande 6 appliquent, pendant une durée de fonctionnement T, un signal de commande à l'interrupteur au circuit d'alimentation 9 des moyens de chauffage 10 grâce auquel l'aliment est traité en plusieurs opérations selon le plus proche désir de l'utilisateur. Dès que la durée de fonctionnement T est écoulée, un signal de commande de fin d'une opération de chauffage est transmis à un dispositif d'éjection connu en soi. L'aliment est éjecté automatiquement de l'enceinte de grillage et les moyens de commande sont désactivés.

Grâce au procédé de traitement de l'aliment selon l'invention, le niveau de grillage de l'aliment est contrôlé indépendamment du niveau de consistance de l'aliment et, de ce fait, la précision des réglages des niveaux de grillage et de consistance des aliments est nettement amélioré en se rapprochant d'un traitement idéal répondant aux souhaits de tout utilisateur.

De plus, le procédé mis en oeuvre dans les grille-pain évite les perturbations "FLICKER" gênantes transmises généralement par les appareils électriques connectés sur le réseau électrique. En effet, grâce à l'invention, pour une puissance maximale voisine de 1200 W, on a 3 commutations/min, ce qui est très inférieur aux normes tolérées. Par conséquent, les grille-pain ainsi équipés peuvent utiliser des résistances de chauffage de forte puissance tout en satisfaisant les Normes électriques internationales.

## Revendications

1. Procédé de traitement d'un aliment placé dans un grille-pain électrique comportant un boîtier (1) comprenant au moins une enceinte de grillage (2) avec des moyens de chauffage (10), un circuit d'alimentation (9) desdits moyens de chauffage (10) piloté par un interrupteur électronique (16) et dont la mise sous tension est commandée par un bouton de commande (15), et qui comprend des premiers moyens de sélection (4) d'au moins un niveau de grillage de l'aliment, des seconds moyens de sélection (5) d'au moins un niveau de consistance de l'aliment et des moyens de commande (6) qui appliquent, en fonction des informations reçues des premiers et seconds moyens de sélection (4 et 5), un signal de commande à l'interrupteur électronique (16) du circuit d'alimentation (9) pendant une durée de fonctionnement T,
**caractérisé en ce que,** pendant la durée de fonctionnement T, les moyens de commande (6) déclenchent successivement une première opération au cours de laquelle lesdits moyens de commande (6) alimentent les moyens de chauffage (10) en continu à une puissance maximale pendant une durée Tv liée aux premiers moyens de sélection, une deuxième opération au cours de laquelle les moyens de commande (6) coupent l'alimentation des moyens de chauffage (10) pendant une durée d'interruption Ti et une troisième opération au cours de laquelle, compte tenu de la sélection du niveau de consistance de l'aliment, les moyens de commande (6) alimentent cycliquement les moyens de chauffage (10) selon un cycle marche-arrêt d'une durée Tc et dont la période Tf est constante.

2. Procédé de traitement d'un aliment selon la revendication 1,
**caractérisé en ce que** la durée Tv comprend une durée fixe T₁ et une durée variable T₂.

3. Procédé de traitement d'un aliment selon la revendication 2,
**caractérisé en ce que** la durée fixe T₁ présente une valeur choisie aux environs de 30s et la durée variable T₂ présente une valeur comprise dans une plage entre 0 et 90s.

4. Procédé de traitement d'un aliment selon la revendication 1 ou 2,
**caractérisé en ce que** la durée Ti de la deuxième opération et la durée Tc de la troisième opération présente une durée totale de fonctionnement Td dont la limite supérieure est sensiblement égale à 5 mn.

5. Procédé de traitement d'un aliment selon la revendication 4,
**caractérisé en ce qu**'à la fin de la durée totale Td, la température à l'intérieur de l'enceinte de grillage (2) est inférieure à 100°C.

6. Procédé de traitement d'un aliment selon l'une quelconque des revendications précédentes,
**caractérisé en ce que** la durée d'interruption Ti présente une valeur choisie aux environs de 15s.

7. Procédé de traitement d'un aliment selon l'une quelconque des revendications précédentes,
**caractérisé en ce que,** pour un niveau de consistance déterminé, le cycle marche-arrêt des moyens de chauffage présente, sur la période Tf, un temps de marche T_{ON} et un temps d'arrêt T_{OFF}, ce dernier étant sensiblement trois fois supérieur au temps de marche T_{ON}.

8. Procédé de traitement d'un aliment selon la revendication 7,
**caractérisé en ce que** le temps de marche T_{ON} et le temps d'arrêt T_{OFF} sont choisis respectivement de l'ordre de 5s et de l'ordre de 15s.

## Patentansprüche

1. Verfahren zur Behandlung eines Nahrungsmittels, das sich in einem elektrische Brotröster befindet, welcher ein Gehäuse (1) mit mindestens einer Grillkammer (2) mit einer Heizeinrichtung (10) und einen Versorgungsschaltkreis (9) für die Heizeinrichtung (10) aufweist, der durch einen elektronischen Schalter (16) geschaltet wird, dessen Spannungsanschluß von einem Steuerknopf (15) gesteuert wird, und der eine erste Auswahleinrichtung (4) für mindestens ein Grillniveau des Nahrungsmittels, eine zweite Auswahleinrichtung (5) für mindestens ein Beschaffenheitsniveau des Nahrungsmittels und eine Steuereinrichtung (6) umfaßt, die in Abhängigkeit von den durch die erste und zweite Auswahleinrichtung (4 und 5) erhaltenen Informationen während einer Funktionsdauer T ein Steuersignal an den elektronischen Schalter (16) des Versorgungsschaltkreises (9) anlegt, **dadurch gekennzeichnet, daß** während der Funktionsdauer T die Steuereinrichtung (6) nacheinander eine erste Operation, während der die Steuereinrichtung (6) für eine Dauer Tv, die von der ersten Auswahleinrichtung abhängt, die Heizeinrichtung (10) kontinuierlich mit einer maximalen Leistung versorgt, eine zweite Operation, während der die Steuereinrichtung (6) für eine Unterbrechungsdauer Ti die Versorgung der Heizeinrichtung (10) unterbricht, und eine dritte Operation auslöst, während der unter Berücksichtigung des ausgewählten Beschaffenheitsniveaus des Nahrungsmittels die Steuereinrichtung (6) für die Dauer Tc die Heizeinrichtung (10) gemäß einem Ein-/Ausschaltzyklus, dessen Periode Tf konstant ist, zyklisch versorgt.

2. Behandlungsverfahren eines Nahrungsmittels nach Anspruch 1, **dadurch gekennzeichnet, daß** die Zeitdauer Tv eine feste Dauer T₁ und eine variable Dauer T₂ umfaßt.

3. Behandlungsverfahren eines Nahrungsmittels nach Anspruch 2, **dadurch gekennzeichnet, daß** die feste Dauer T₁ einen ausgewählten Wert im Bereich von 30 Sek. und die variable Dauer T2 einen Wert darstellt, der in einem Bereich zwischen 0 und 90 Sek. liegt.

4. Behandlungsverfahren eines Nahrungsmittels nach Anspruch 1 oder 2, **dadurch gekennzeichnet, daß** die Dauer Ti der zweiten Operation und die Dauer Tc der dritten Operation eine Gesamtbetriebsdauer Td darstellen, deren obere Grenze bei ungefähr 5 Min. liegt.

5. Behandlungsverfahren eines Nahrungsmittels nach Anspruch 4, **dadurch gekennzeichnet, daß** die Temperatur im Inneren der Grillkammer (2) am Ende der Gesamtdauer Td unter 100°C liegt.

6. Behandlungsverfahren eines Nahrungsmittels nach einem der vorangehenden Ansprüche, **dadurch gekennzeichnet, daß** die Unterbrechungsdauer Ti einen ausgewählten Wert von etwa 15 Sek. darstellt.

7. Behandlungsverfahren eines Nahrungsmittels nach einem der vorangehenden Ansprüche, **dadurch gekennzeichnet, daß** für ein bestimmtes Beschaffenheitsniveau der Ein/Ausschaltzyklus der Heizeinrichtung mit der Periode Tf eine Anschaltzeit T_{ON} und eine Ausschaltzeit T_{OFF} darstellt, wobei letztere im wesentlichen dreimal größer als die Anschaltzeit T_{ON} ist.

8. Behandlungsverfahren eines Nahrungsmittels nach Anspruch 7, **dadurch gekennzeichnet, daß** die Anschaltzeit T_{ON} und die Ausschaltzeit T_{OFF} in der Größenordnung von 5 Sek. bzw. in der Größenordnung von 15 Sek. ausgewählt sind.

## Claims

1. Method of treating a food placed in an electric toaster having a casing (1) comprising at least one toasting chamber (2) with heating means (10), a circuit (9) supplying said heating means (10) controlled by an electronic switch (16), whose energising is controlled by a control button (15), and which comprises first means of selecting (4) at least one food toasting level, second means of selecting (5) at least one food consistency level and control means (6) which apply, according to the informations received from the first and second selection means (4 and 5), a control signal to the switch (16) of the supply circuit (9) for an operating period T,
**characterised in that,** during the operating period T, the control means (6) successively trigger a first operation during which said control means (6) supply the heating means (10) continuously at a maximum power for a duration Tv related to the first selection means, a second operation during which the control means (6) cut off the supply of the heating means (10) for an interruption duration Ti and a third operation during which, having regard to the selection of the food consistency level, the control means (6) cyclically supply the heating means (10) in a stop-start cycle with a duration Tc and whose period Tf is constant.

2. Method of treating a food according to claim 1,
**characterised in that** the duration Tv comprises a fixed duration T₁ and a variable duration T₂.

3. Method of treating a food according to claim 2,
**characterised in that** the fixed duration T₁ has a value chosen at around 30 secs and the variable duration T₂ has a value lying within a range between 0 and 90 secs.

4. Method of treating a food according to claim 1 or 2,
**characterised in that** the duration Ti of the second operation and the duration Tc of the third operation has a total operating duration Td whose upper limit is substantially equal to 5 min.

5. Method of treating a food according to claim 4,
**characterised in that,** at the end of the total duration Td, the temperature inside the toasting chamber (2) is below 100°C.

6. Method of treating a food according to any one of the preceding claims,
**characterised in that** the interruption duration Ti has a value chosen at around 15 secs.

7. Method of treating a food according to any one of the preceding claims,
**characterised in that,** for a given consistency level, the stop-start cycle of the heating means has, over the period Tf, an operating time T_{ON} and an off time T_{OFF}, the latter being substantially three times longer than the operating time T_{ON}.

8. Method of treating a food according to claim 7,
**characterised in that** the operating time T_{ON} and the off time T_{OFF} are chosen respectively at around 5 secs and around 15 secs.
